# EUROPEAN PATENT SPECIFICATION

(11) **EP 0 864 901 B1**
(45) Date of publication and mention of the grant of the patent: **19.11.2003**
(21) Application number: 98301578.5
(22) Date of filing: 03.03.1998
(51) Int. Cl.: G02B 26/02

(54) **Gas-damped micromechanical modulator**
Gasgedämpfter mikromechanischer Modulator
Modulateur micromécanique amortissé par un gaz

(30) Priority: 12.03.1997 US 815774
(43) Date of publication of application: 16.09.1998
(73) Proprietor: LUCENT TECHNOLOGIES INC., Murray Hill, New Jersey 07974-0636 (US)
(72) Inventor: Greywall, Dennis Stanley, White House Station, New Jersey 08889 (US)
(74) Representative: Watts, Christopher Malcolm Kelway, Dr.

(56) References cited:
- EP-A- 0 417 523
- DE-A- 4 211 898
- GOOSSEN K W ET AL: "SILICON MODULATOR BASED ON MECHANICALLY-ACTIVE ANTI-REFLECTION LAYER WITH 1 MBIT/SEC CAPABILITY FOR FIBER-IN-THE-LOOP APPLICATIONS" IEEE PHOTONICS TECHNOLOGY LETTERS, vol. 6, no. 9, September 1994, pages 1119-1121, XP000468079

## Description

### Field of the Invention

The present invention relates generally to high speed micromechanical structures.

### Background of the Invention

A micromechanical optical modulator is useful for encoding data onto an optical signal for transmission through an optical communications network. Typically, such a modulator has a variable gap defined by two layers of material, one of which layers is movable towards the other layer. The change in the location of the movable layer relative to the other layer, which is typically a nonmoving substrate layer, and the concominant change in the size of the gap, alters the optical properties of the modulator. Such a change in optical properties can be used to modulate an optical signal.

For some applications, such as Ether Net and high-definition television, optical modulators will be required to operate at 10 Megabits per second or more. Most conventional micromechanical modulators are typically limited, however, to data (bit) rates of about 2 Megabits per second.

The aforementioned data rate limitation arises for several reasons. One reason pertains to the substantial increase in drive voltage required to obtain such higher speeds. See U.S. Pat. No. 5,646,772 to Yurke. A second reason pertains to ringing or vibration that occurs in the movable layer. At operating rates below about 1 MHz (about 2 Megabits per second), gas within the modulator cavity, usually air, is able to sufficiently damp the movable layer. More particularly, the shear flow that is generated in the air as the movable layer moves dissipates the layer's kinetic energy. At operating frequencies above about 1 MHz, however, this dissipation mechanism becomes ineffective because the air does not have sufficient time to flow. Rather, the air is compressed as the layer moves downwardly, storing energy like a spring.

As such, there is a need for a micromechanical optical modulator capable of attaining high operating speeds.

### Summary of the Invention

The invention is defined by claim 1.

It has been discovered that to achieve a "clean" square wave response in "squeeze-type" micromechanical structures operating at frequencies above about 1 MHz, two thresholds must be met. First, such structures must be pressurized to greater than atmospheric pressure. Second, a movable member possessing holes for gas flow that characterizes such devices must have a minimum porosity, achieved by providing a sufficient number of holes.

Improved squeeze-type micromechanical structures according to the present invention operate above atmospheric pressure. Further, in accordance with the present invention, such structures have a minimum porosity, 1/ (ωₒτ), of about 1.4 and a minimum reduced pressure or gas frequency, ω_{g} /ωₒ , of about 1.25. High-speed operation of such devices at less than about 10 percent "ringing" requires that ω_{g} /ωₒ > 1.25 and${\text{0.25 + 0.7(ω}}_{\text{g}} {\text{/ω}}_{\text{o}} {\text{)}}^{\text{2}} {\text{- 0.8(ω}}_{\text{g}} {\text{/ω}}_{\text{o}} {\text{- 1.25) ≤ 1/(ω}}_{\text{o}} {\text{τ) ≤ 0.25 + 0.7(ω}}_{\text{g}} {\text{/ω}}_{\text{o}} {\text{)}}^{\text{2}} {\text{+ (ω}}_{\text{g}} {\text{/ω}}_{\text{o}} \text{- 1.25).}$

### Brief Description of the Drawings

Further features of the invention will become more apparent from the following detailed description of specific embodiments thereof when read in conjunction with the accompanying drawings, in which like elements have like reference numerals and in which:
FIG. 1 is a cross-sectional view of an exemplary drumhead modulator;
FIG. 2 is a plan view of an exemplary drumhead modulator;
FIG. 3 is a plot of reduced gas frequency versus piston porosity showing a region for relatively "clean" square-wave response;
FIG. 4 illustrates a model device that forms the basis for analysis of the behavior of squeeze-type micromechanical devices presented herein;
FIG. 5 is a plot of gas frequency f_{g} versus pressure for two representative gap spacings;
FIG. 6 is a plot showing displacement amplitude versus drive frequency versus piston porosity at fixed reduced gas frequency;
FIGS. 7a-c are plots of displacement amplitude versus drive frequency for different values of reduced gas frequency;
FIG. 8a is a plot of drive frequency as a function of piston porosity;
FIG. 8b is a plot of displacement amplitude versus piston porosity;
FIGS. 9a-c show plots of the square wave response corresponding to a given frequency response for a reduced gas frequency of 2 and varying piston porosity;
FIGS. 10a-d show plots of the square wave response for various drive frequencies at a reduced gas frequency of 2 and several values of piston porosity;
FIGS. 11a-d show top view schematics of exemplary damping hole patterns in drumhead membranes;
FIG. 12 shows measured resonance curves for exemplary drumhead modulator no. 2 at various helium pressures;
FIG. 13 shows measured resonance curves for exemplary drumhead modulator no. 5 at various helium pressures;
FIG. 14 is a plot of reduced gas frequency versus pressure to the one-half power for exemplary drumhead modulator nos. 2 and 5; and
FIG. 15 is a plot of membrane porosity squared versus pressure squared for exemplary drumhead modulator no. 4 under hydrogen, helium and neon atmospheres.

### Detailed Description

The present invention is applicable to "squeeze-type" micromechanical structures wherein a volume of gas is compressed as a movable layer or member of such a structure moves. One example of a squeeze-type micromechanical structure is a drum-head micromechanical modulator possessing damping holes as described in U.S. Patent Application S.N. 08/565,453. Illustrative embodiments presented herein are directed to such drum-head micromechanical optical modulators. It should be understood, however, that the present invention applies to other squeeze-type structures as well. Application number 08/565,453 is incorporated by reference herein.

The theory and modeling underlying the present invention is presented in Section II, subsections 1-9 of this specification.

### SECTION I

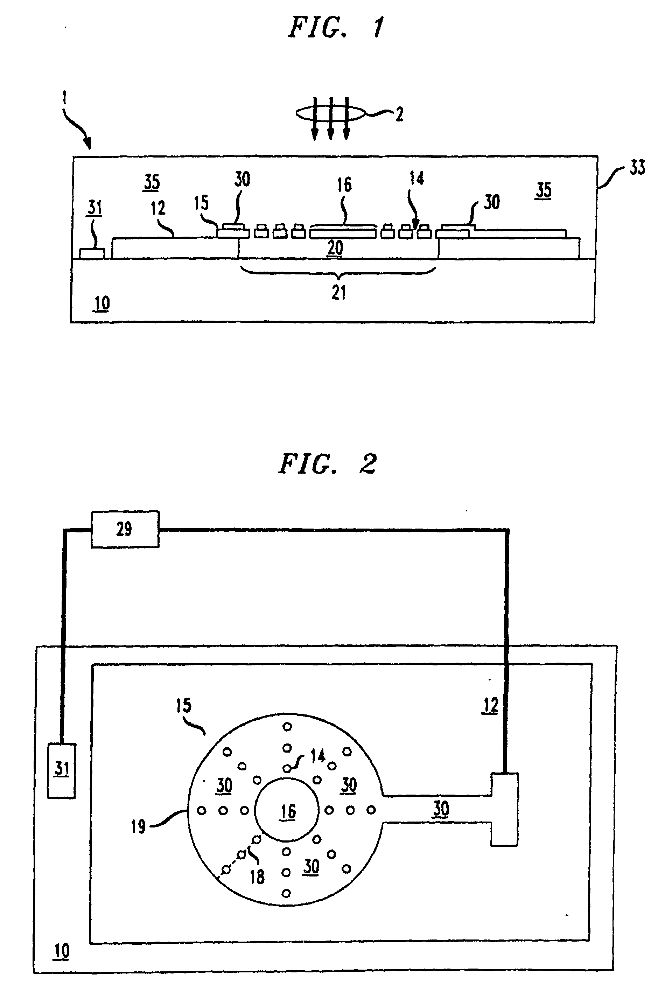

An exemplary drum-head micromechanical modulator 1 having damping holes is illustrated in FIGS. 1 and 2. The modulator has a movable layer or member or "membrane" 15 that is suspended, via a layer 12, over a nonmoving layer or substrate 10, defining a gap 20 therebetween. The membrane 15 forms a continous surface that overlaps, at every point, the perimeter 19 of modulator cavity 21 defined in the layer 12. A plurality of holes 14 are arranged in a preferably regular pattern across the membrane 15.

In the exemplary drum-head modulator shown in FIGS. 1 and 2, the holes 14 are located beginning outside of a centrally located region 16 that forms an "optical window." The optical window 16 is typically in optical communication with an optical waveguide or fiber, not shown, that delivers an optical signal 2 to the modulator. In other embodiments, holes 14 can be located within the optical window 16, although their presence in that region of the membrane 15 may affect the optical properties of the modulator. In still other embodiments, the modulator, or, more generally, other squeeze-type micromechanical structures, can be configured so that the damping holes 14 are located in another part of the structure, such as in the layer 12, and allow gas to move out of the region beneath the membrane or movable member 15, i.e., the modulator cavity, to provide damping.

The modulator is enclosed within a hermetic seal 33 using known techniques. The hermetically sealed modulator is under a gas atmosphere, preferably hydrogen or a noble gas, i.e., helium, neon, and the like. Pressure in the region 35 above the membrane is referred to as the ambient pressure of the modulator or the membrane.

The membrane 15 must be conductive, or, in other embodiments such as shown in FIGS. 1 and 2, have a layer 30 of conductive material disposed thereon. To operate the modulator, the membrane 15 and substrate 10 are placed in electrical contact with controlled voltage source 29. A contact 31 may be deposited on the substrate 10 to facilitate wire bonding to the controlled voltage source.

In operation, the membrane 15 moves between a quiescent or equilibrium position towards the substrate under the action of the controlled voltage source 29. Movement of the membrane 15 changes the size of the gap 20, which changes the reflectivity of the modulator.

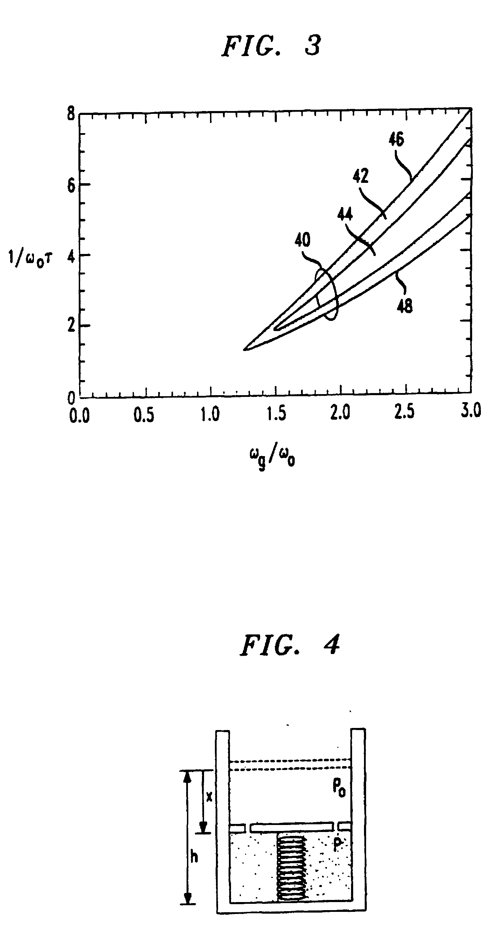

As described in further detail in Section II of this specification, it has been discovered that to satisfactorily damp vibrations associated with a rapidly-oscillating layer or member of a squeeze-type micromechanical structure, such as the membrane of the aforedescribed modulator, a minimum porosity, such as may be imparted by a number of holes in the layer, and a minimum ambient gas pressure, is required. This discovery is described, and graphically illustrated, in FIG. 3.

FIG. 3 is a plot of 1/ (ωₒτ) versus ω_{g} /ωₒ. The parameter 1/τ is a measure of the is a membrane's porosity. *See* Section II. 1. The parameter ω_{g}, referred to as the gas frequency, is a measure of the contribution to the resonant frequency of the membrane that is associated with the compression of the gas. As can be seen from Eq. (7) in Section II.1, ω_{g} is proportional to the square root of the ambient pressure, Pₒ, and can thus be used as a measure of pressure. The parameter ωₒ is the natural (vacuum) resonant frequency of the membrane. *See* Sections II. 1, II.2. The parameter ωₒ is used to express the membrane parameters in reduced (dimensionless) quantities.

With continuing reference to FIG. 3, region 40 defines an operating regime in which membrane ringing will be limited to 10 percent or less. The region 40 is defined herein as an "acceptable" operating regime for at least some uses of a modulator. More particularly, region 42 defines an operating regime having 5 to 10 percent ringing, and region 44 defines an operating regime having from 0 to 5 percent ringing. FIG. 3 indicates that threshold values of 1/(ωₒτ) and ω_{g}/ωₒ must be met to achieve acceptable operation. Specifically, the parameter 1/(ωₒτ) must be greater than about 1.4 and the parameter ω_{g}/ωₒ must be greater than about 1.3. One previously unknown implication of this result is that a minimum pressure must be exceeded to achieve a substantially clean square wave response, i.e., very little ringing, independent of the number of damping holes. The uppermost boundary 46 of region 42 can be described by an empirically determined expression: 1/(ωₒτ) = 0.25 + 0.7(ω_{g}/ωₒ)² + (ω_{g}/ωₒ - 1.25), for ω_{g} /ωₒ > 1.3. Similarly, the lower most boundary 48 of region 42 can be described by: 1/ (ωₒτ) = 0.25 + 0.7(ω_{g} /ωₒ)² -0.8(ω_{g} /ωₒ - 1.25) , for ω_{g} /ωₒ > 1.3. Thus, in a preferred embodiment of the present invention, the reduced gas frequency of a drum head modulator, as given by ω_{g} /ωₒ, should be at least 1.3, and${\text{0.25 + 0.7(ω}}_{\text{g}} {\text{/ω}}_{\text{o}} {\text{)}}^{\text{2}} {\text{- 0.8(ω}}_{\text{g}} {\text{/ω}}_{\text{o}} {\text{- 1.25) ≤ 1/(ω}}_{\text{o}} {\text{τ) ≤ 0.25 + 0.7(ω}}_{\text{g}} {\text{/ω}}_{\text{o}} {\text{)}}^{\text{2}} {\text{+ (ω}}_{\text{g}} {\text{/ω}}_{\text{o}} \text{- 1.25).}$

Methods and expressions for determining the value of 1/τ and ω_{g} are presented in Section II. An embodiment of a method for making a device that operates according to the present invention, i.e., that falls within the aforementioned desirable operating regimes of FIG. 3, is described in Section II.9. To improve design accuracy, the methodology described in Section II.9 is used to provide a "first guess" at the device design, i.e., number of damping holes, etc. A device is then built according to the first guess, and values of 1/τ and ω_{g} are extracted from measured frequency response curves for the device, as described in Section II.8A. If required, a scaling factor can then be applied to achieve satisfactory square-wave response, i.e., adjust the device's operation to fall within the desired region of FIG. 3. Such a scaling factor can be determined by applying an appropriate multiplier to the plot of 1/ (ωₒτ) versus ω_{g}/ωₒ obtained for the "first guess" device to bring it within a region of acceptable performance, as defined in FIG. 3.

Using the methodology described in Section II, the maximum speed of a modulator having a typical configuration and limited to an ambient pressure of 1 atmosphere can be estimated. Assume a gap of 0.97 microns between the membrane and substrate (62 percent of a wavelength of the incident optical signal), a membrane diameter of 150 microns and a regular hole spacing such as illustrated in FIGS. 11a-11d. From Section II.9, f_{g} = 1.3P^{0.5}, where f_{g} = ω_{g} /(2π). So, at 1 bar pressure, f_{g} = 1.3 MHz. Taking ω_{g} /ωₒ = 2 as a desirable minimum, then the natural resonant frequency ωₒ of the modulator is 1.3/2 = 0.65 MHz. Assuming that the bit rate of the modulator will be less than or equal to a maximum of three times the natural resonant frequency of the membrane, then, bit rate = 0.65x3 ≈ 2 Megabits per sec. Thus, it has been discovered that to achieve bit rates greater than about 2 Megabits per second requires that the ambient pressure of the modulator is greater than atmospheric pressure.

### SECTION II

### 1.0 Model

In Section II of this specification, the underlying theory and model development for the invention described in Section I is presented. The model incorporates the essential elements of an actual gas-damped device for which the mechanical response can be determined analytically.

The model device shown in Fig. 4 consists of a piston of mass, m, and cross-sectional area, a, that is supported within a cylinder by a mechanical spring having spring constant k. The piston has small holes that provide an escape for gas trapped in the cylinder. At equilibrium, the piston sits a distance, h, above the bottom of the cylinder. Because the assembly is located in a large volume, the gas pressure above the piston remains at the ambient gas pressure, Pₒ, independent of the piston's position and the instantaneous pressure, P, in the cylinder.

The equation of motion for the driven resonator is 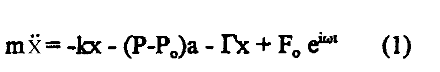 where x is the piston's displacement from equilibrium, 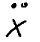 is the acceleration, and Γ is the ordinary damping constant associated with the piston's velocity. The solution of expression (1) is represented by the expressions: x = Ae^{i(ωt - φ)} (2) and, P - Pₒ = Be^{i(ωt - φ)} (3), where, in general, φ₁ ≠ φ₂.

The simplification is made that the rate of gas flow through the holes in the piston is proportional to the instantaneous pressure difference P-Pₒ. That is, it is assumed that${\text{n = -ξ (P-P}}_{\text{o}} \text{).}$

In general, ξ will be a very complicated function depending on many parameters, including the number, size, and physical arrangement of the holes in the piston; the gap size h; the type of gas used and the mean free path of the gas molecules.

A characteristic time τ is associated with the decay of pressure in the fixed volume *a*h:$\text{1/τ} \text{≡} {\text{P}}_{\text{o}} {\text{ξ / n}}_{\text{o}} \text{= (RT/} \text{a} \text{)hξ}$

Define:${\text{ω}}_{\text{o}} {\text{}}^{\text{2}} \text{= k/m}$${\text{ω}}_{\text{g}} {\text{}}^{\text{2}} \text{= (} \text{a} {\text{P}}_{\text{o}} \text{/h) / m.}$

Assuming that the term Γ is small enough to be neglected, expressions for the amplitude and phase may be written: 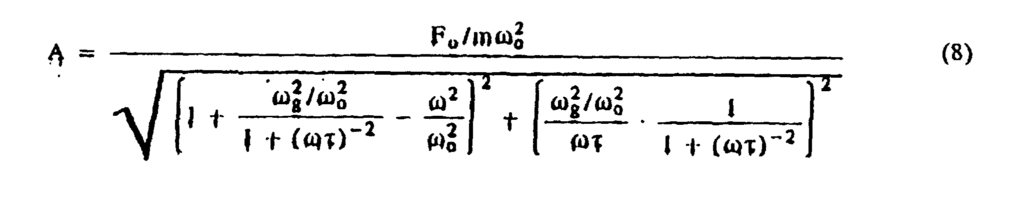 ${\text{tanφ}}_{\text{1}} \text{=} \frac{{\text{ω}}_{\text{g}}^{\text{2}} \text{/ωτ}}{{\text{(ω}}_{\text{o}}^{\text{2}} {\text{- ω}}^{\text{2}} {\text{) (1 + (ωτ)}}^{\text{-2}} {\text{) + ω}}_{\text{g}}^{\text{2}}} \text{.}$ Using expression (9), 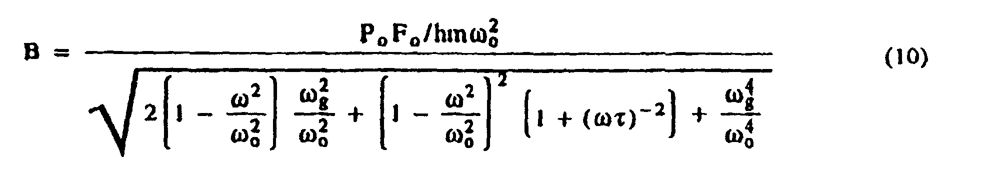 and${\text{tanφ}}_{\text{2}} \text{=} \frac{\text{1}}{\text{ωτ}} \text{·} \frac{{\text{(ω}}^{\text{2}} {\text{- ω}}_{\text{o}}^{\text{2}} \text{)}}{{\text{(ω}}_{\text{o}}^{\text{2}} {\text{+ ω}}_{\text{g}}^{\text{2}} {\text{- ω}}^{\text{2}} \text{)}} \text{.}$

### 2.0 Magnitude of ωₒ

Typically, the characteristic frequency fₒ = ωₒ / 2π of a micromechanical structure lies in the broad frequency range between low kHz and low MHz. As described below, gas frequency f_{g} = ω_{g}/2π is typically on the order of MHz at atmospheric pressure and is typically greater than fₒ.

If the piston has uniform thickness t, then m = *a*tρ, where ρ is density. Then, from expression (7):${\text{f}}_{\text{g}} {\text{= 1 / 2π [P}}_{\text{o}} {\text{/(htρ)]}}^{\text{0.5}}$

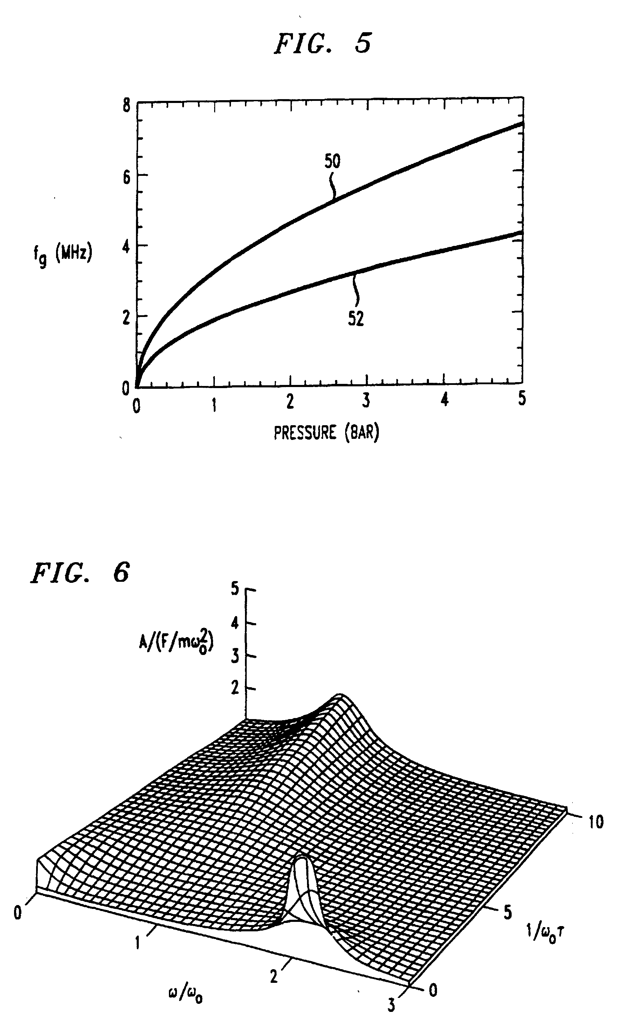

Consider, as an example, a piston comprised of silicon nitride having a density ρ = 3.1 gm/cm³ and a thickness of 0.2 microns. The gap h is either 0.39 or 1.17 microns, corresponding, respectively, to λ/4 or 3λ/4, where λ, the operating wavelength, is 1.56 microns. FIG. 5 shows f_{g} plotted as a function of pressure at a gap of λ/4 (reference numeral 50) and a gap of 3λ/4 (reference numeral 52).

From the description of FIG. 3 above, and as is described in more detail later in this specification, it is desirable for f_{g} ≥ 2 fₒ. So, if it is desired for fₒ to be 3MHz, then, for those embodiments, f_{g} should be 6MHz. Curve 50 (h = λ/4) of FIG. 5 shows that for f_{g} = 6MHz, ambient gas pressure must be about 3 bar.

### 3.0 Amplitude and Pressure Plots with ωₒ/ω_{g} = 2

FIG. 6 is a three-dimensional plot of A versus ω and 1/τ, in dimensionless units, for ωₒ/ω_{g} = 2. For low porosities, i.e., 1/(ωₒτ) ≈ 0, a sharp resonance peak exists at ω/ωₒ ≈ [1 + (ω_{g}² /ωₒ²)]^{1/2} = 5^{1/2} and at low frequencies a reduced response amplitude much smaller than one. As the porosity increases, the peak amplitude first decreases then increases near ω/ωₒ = 1. For 1/(ωₒτ) ≥ 10, the frequency response exhibits a more "regular" pattern, with the reduced amplitude increasing monotonically from unity on the low frequency side of the peak.

In a transitional region between 1/(ωₒτ) ≈ 0 and 1/(ωₒτ) ≥ 10, the calculated response (with ω_{g}/ωₒ fixed at 2) does not exhibit any peaks. Such a lack of peaks suggests that critical damping may be achievable for some specific value of 1/(ωₒτ).

### 4.0 Constraint on ω_{g} for Critical Damping

In some, but not all embodiments, critical damping can be achieved by adjusting the piston's porosity. Critical damping is achieved in only those embodiments wherein ω_{g}/ωₒ is sufficiently large.

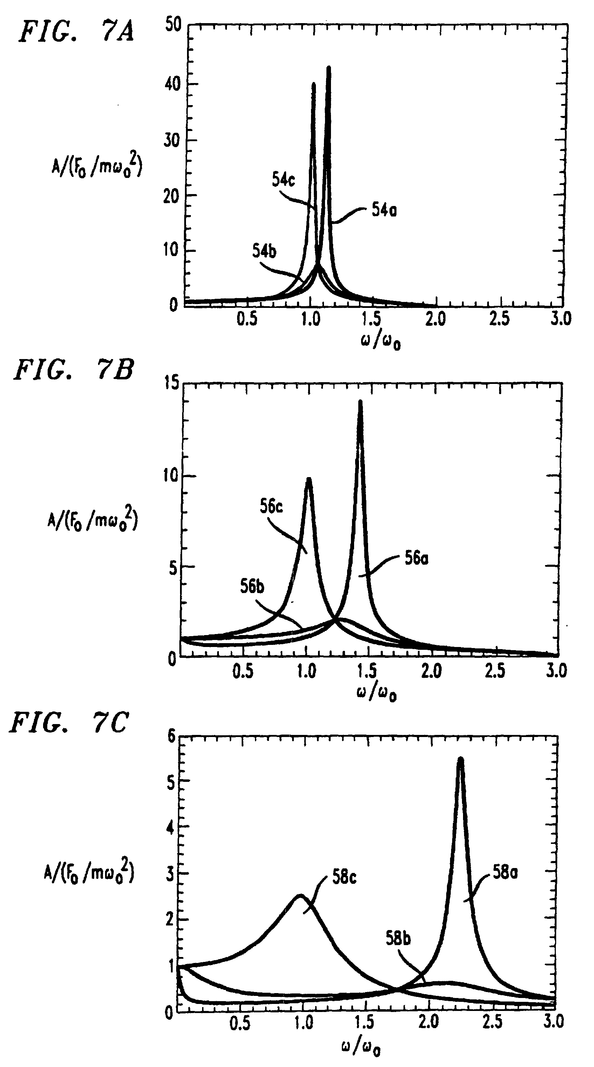

In each one of the Figures 7a-c, displacement amplitude A is plotted versus ω/ωₒ for three values of 1/(ωₒτ) and a fixed value of ω_{g}/ωₒ. Curves for 1/(ωₒτ) = 0.1 (identifier "a"), 1 (identifier "b") and 10 (identifier "c") are shown in each Figure. In FIG. 7c, ω_{g}/ωₒ = 2. FIGS. 7a and 7b show corresponding curves for ω_{g}/ωₒ = 0.5 and 1.0, respectively. Note the difference in the scale of the ordinate (y) axes among FIGS. 7a - 7c. Significant peaks are observed in plots 54b and 56b (1/(ωₒτ) = 1.0). Such peaks suggest that a desired level of damping may be unattainable at lower gas frequencies, i.e., ω_{g}/ωₒ = 0.5 and 1.0. As described below, a device will indeed be insufficiently damped at such lower gas frequencies.

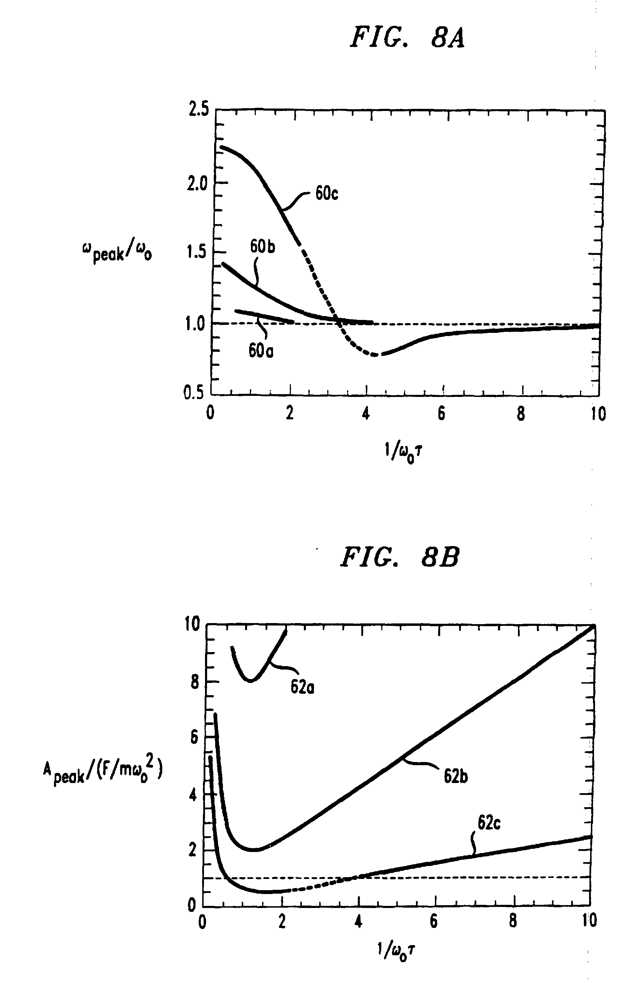

In FIGS. 8a & 8b, amplitude and frequency, respectively, at the resonance peak, is plotted as a function of piston porosity. Curves are shown for ω_{g}/ωₒ = 0.5 (identifier "a"), 1.0 (identifier "b") and 2.0 (identifier "c"). Dashed regions of the curves for ω_{g}/ωₒ = 2 indicate the porosity region wherein the response curves do not exhibit a well-defined maximum. In plot 62a (ω_{g}/ωₒ = 0.5), the reduced peak amplitude never drops below 8, i.e., the quality factor, Q = ωₒ/[τωₒ²] ≈ 8. In plot 62b (ω_{g}/ωₒ = 1.0), the minimum amplitude is about 2. It is only at reduced gas frequencies of about 2 (plot 62c) or more that the amplitude drops below unity, indicating a region of appreciable damping. Thus, independent of piston porosity, critical damping can not be achieved unless ω_{g}/ωₒ is about 2 or greater. As such, a device operating at frequencies above a few MHz must have an ambient gas pressure greater than atmospheric pressure.

### 5.0 Qualitative Behavior of τ

It has been found empirically that an expression of the form:${\text{1/τ = (α}}^{\text{2}} {\text{+ β}}^{\text{2}} {\text{P}}^{\text{2}} {\text{)}}^{\text{0.5}}$ can be used to fit experimental results obtained for 0.5 < P < 3 bar. And, it has been found that a = α(M) and β = β(η), but with functional dependencies other than those derived for the simple piston model presented in Section II.1. More particularly, for the exemplary devices studied herein, it has been found that:${\text{α ∼ M}}^{\text{-1/4}}$${\text{β ∼ η}}^{\text{-1/2}}$

### 6.0 Response to a Square-Wave Drive

High-speed switching applications require devices whose response to a discontinuous step change in drive exhibits a short rise time and no significant ringing. The response to a square-wave drive may be determined by simply summing the complex frequency responses to the Fourier components of the drive signal.

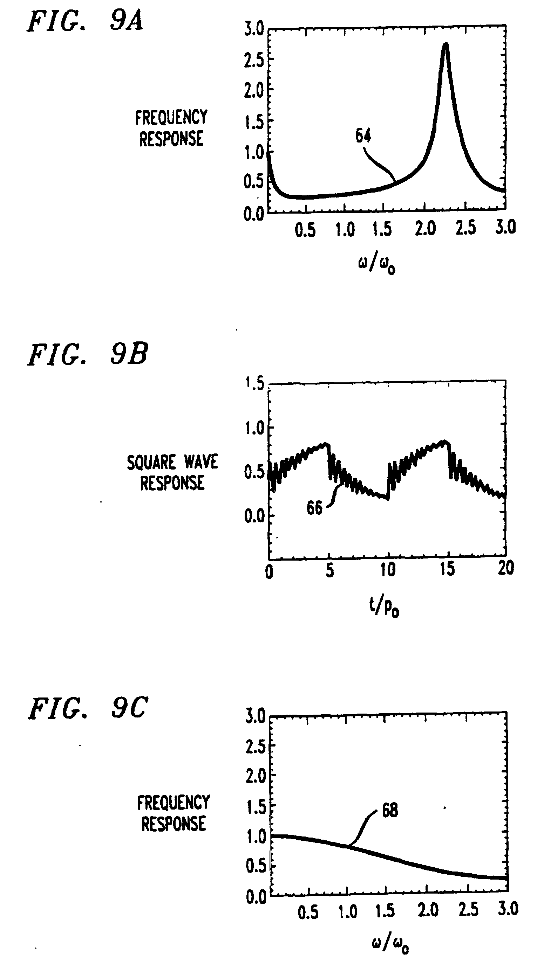

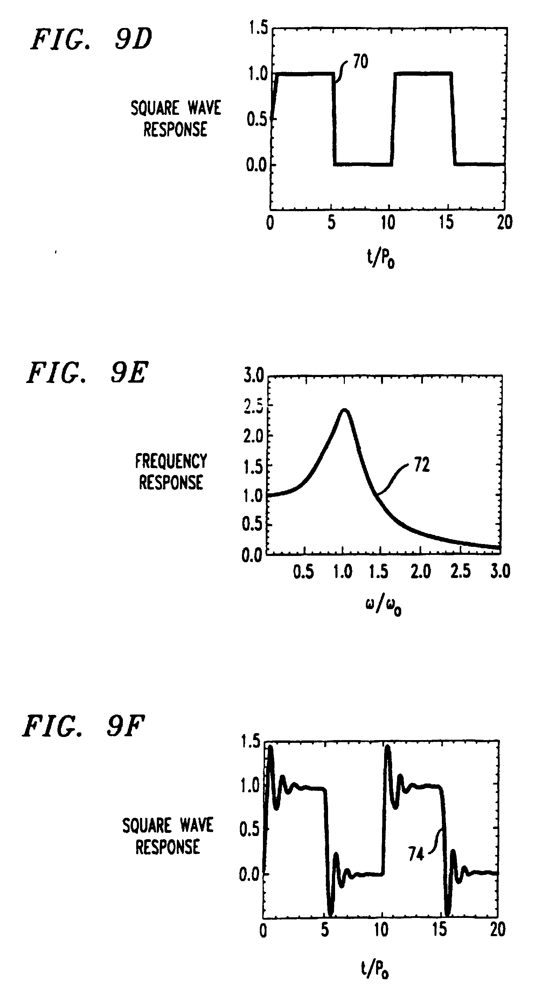

FIGS. 9a, 9c, and 9e show frequency response curves, and FIGS. 9b, 9d and 9f show square-wave response curves calculated as described above. All curves are for ω_{g} / ωₒ = 2. The value of 1/ωₒτ is varied between the Figures, with 1/ωₒτ = 0.2, 3.0 and 10.0 for FIGS. 9a/9b, 9c/9d and 9e/9f, respectively. Time for the square-wave response curves is measured in units of the natural period pₒ = 1/fₒ.

At small values of 1/ωₒτ (FIGS. 9a & 9b), corresponding to a low porosity piston, frequency response curve 64 exhibits a significant drop in amplitude at low frequencies. Square-wave response curve 66 exhibits behavior characterized by two different time scales. In particular, the first time scale is determined by τ, and the second is determined by fₚₑₐₖ ≈ (fₒ² + f_{g}²)^{0.5} ≈ (5)^{0.5}. At large values of 1/ωₒτ (FIGS. 9e & 9f), corresponding to a very porous piston, both the frequency response curve 72 and the square-wave response curve 74 exhibit behavior similar to that of an underdamped oscillator. Because fₚₑₐₖ, at that limit, is close to the natural frequency fₒ, the ringing occurs at a much lower frequency than in the low porosity regime.

Excellent response is achieved at 1/ωₒτ ≈ 3 (FIGS. 9c & 9d). For such a case, the square-wave response 70 has a rise time characterized by fₒ and does not exhibit ringing. The frequency response curve 68 is substantially free of a resonance peak.

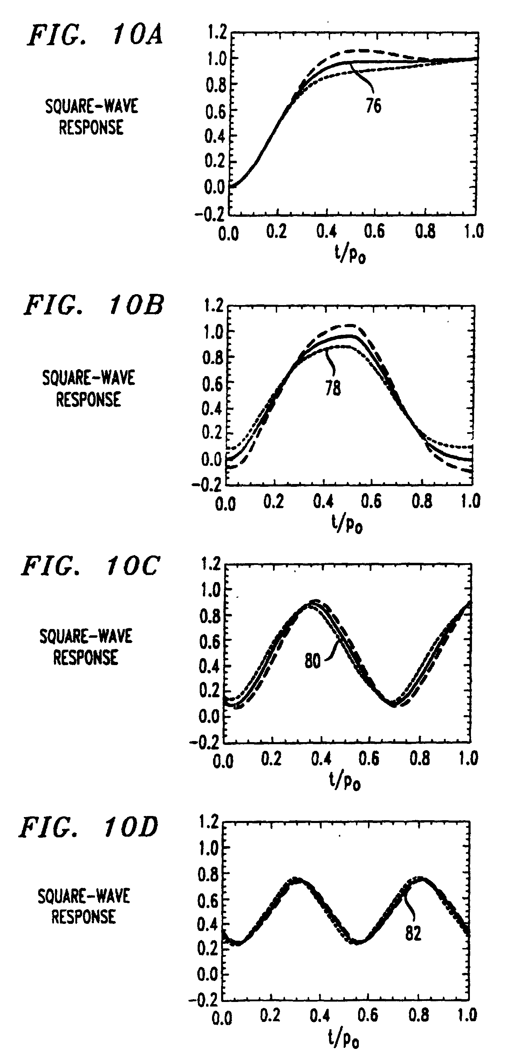

FIGS. 10a - 10d show square-wave response of such a near-optimal device, i.e., 1/ωₒτ = 3.0 (solid line), for drive frequencies of 0.5fₒ, 1.0fₒ, 1.5fₒ, and 2.0fₒ, respectively. Curves are also shown for 1/ωₒτ = 2.5 (dotted line) and 1/ωₒτ = 3.5 (dashed line). As drive frequency increases to above fₒ, i.e., curves 80 and 82, a full amplitude swing between 0 and 1.0 cannot be realized. If, however, a response in the range of from about 0. 1 to about 0.9 is acceptable, then the operating range of a device can be extended to 1.5fₒ (curve 80), which implies a bit rate of 3fₒ.

### 7.0 ω_{g} / ωₒ and 1/ωₒτ for Optimum Square-Wave Response

As described above, substantially ideal square-wave response is attainable in an embodiment wherein ω_{g} / ωₒ = 2 and 1/ωₒτ = 3.0. Other sets of values for those parameters will yield similarly satisfactory square-wave response. Such other values are graphically presented in FIG. 3, which is a plot of 1/ (ωₒτ) versus ω_{g} /ωₒ, previously described in Section I of this specification. As already discussed, the plot indicates that a minimum pressure must be exceeded to achieve a clean square wave response, i.e., very low ringing, independent of piston (membrane) porosity. The existence of such a minimum pressure was previously unknown. Its discovery advantageously results in the ability to design "squeeze-type" micro-mechanical structures, such as modulators, with improved performance, especially when such device are operating at speeds well in excess of a few Mbits/s.

### 8.0 Experimental Results

Performance data were obtained on eight micro-mechanical optical modulators. Each modulator had a "drum-head" configuration as described in Section I, and included a stressed membrane comprised of silicon nitride. Metal comprising 100 angstroms of titanium and 500 angstroms of gold was disposed on the membrane of each modulator in an annular region around an optical window. The metal functioned as an electrode. Damping holes were placed through the electrode and the membrane.

Each modulator also included a silicon substrate having a doped region suitable for conducting electricity. As a voltage was applied across the electrode and substrate, an electrostatic force was generated that caused the membrane to moves toward the substrate. The resulting membrane motion was detected by measuring the modulation in the reflectivity of the central, unmetallized portion of the membrane.

FIGS. 11a - 11d, which show a top view of the "drum-head" membrane, illustrate four different embodiments of damping-hole layouts that were used for the eight modulators. Each of such layouts was used at two different gap spacings. One gap spacing was 0.39 microns (λ/4) and the other was 0.97 microns (0.62λ). In FIGS. 11a - 11d, the dashed circle 84 indicates the perimeter of the membrane, i.e., the perimeter of the modulator cavity. In the embodiments shown in FIGS. 11a - 11c, the membranes had a diameter of 150 microns. In the embodiment shown in FIG. 11d, the membrane had a diameter of 120 microns.

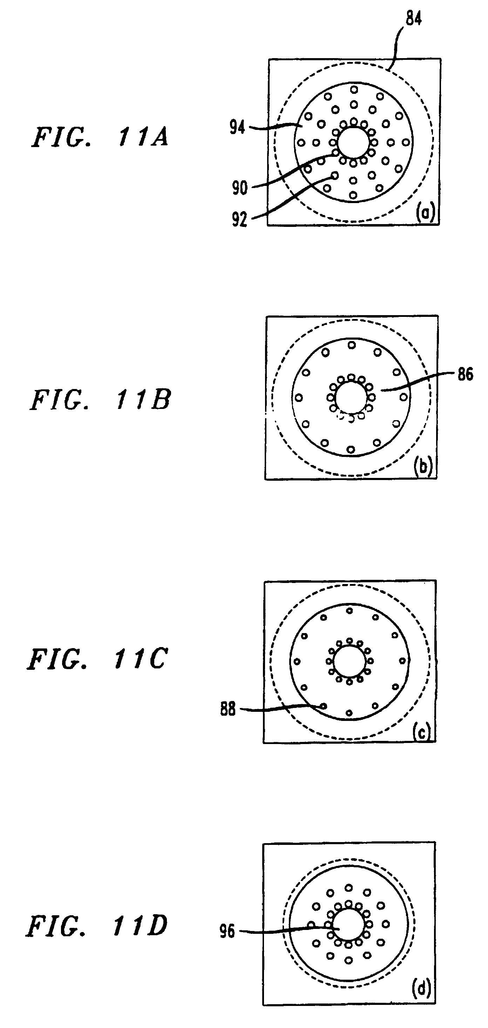

The annular region 86 indicates the metallized region of the membrane. The small circles 88 within the region 86 are damping holes. The damping holes 88 in the layout shown in FIG. 11c have a diameter of 3 microns; the damping holes in FIGS. 11a, 11b and 11d have a diameter of 5 microns. The damping holes 88 are arranged in circular groupings. With reference to FIG. 11a, the innermost circular grouping 90 of damping holes has a diameter of 40 microns, the outermost circular grouping 94 of damping holes has a diameter of 100 microns and the middle circular grouping 92 has a diameter of 70 microns. The optical window 96 is shown within the innermost circular grouping 90 of damping holes. Various parameters for the eight exemplary modulators are shown below in TABLE I. Samples 1/4, 2/5 and 3/6 have the damping hole arrangements shown in FIGS. 11a, 11b and 11c, respectively. Samples 7/8 have the damping hole arrangement shown in FIG. 11d.

**TABLE I -**

| PARAMETERS FOR EXEMPLARY MODULATORS | | | | | |
|---|---|---|---|---|---|
| **Sample Number** | **Mem. Diameter, <µm>** | **Gap Spacing, <µm>** | **Number of Holes, N** | **Hole Diameter, <µm>** | **Natural Frequency f**_{**o,**} **<MHz>** |
| 1 | 150 | 0.39 | 36 | 5 | 2.14 |
| 2 | 150 | 0.39 | 24 | 5 | 2.02 |
| 3 | 150 | 0.39 | 24 | 3 | 2.06 |
| 4 | 150 | 0.97 | 36 | 5 | 2.19 |
| 5 | 150 | 0.97 | 24 | 5 | 2.15 |
| 6 | 150 | 0.97 | 24 | 3 | 2.26 |
| 7 | 120 | 0.39 | 24 | 5 | 2.94 |
| 8 | 120 | 0.97 | 24 | 5 | 2.67 |

### A. Method for Extracting ω_{g} and τ from Frequency Response Curves

The mechanical frequency response of a device is mapped out experimentally by simply sweeping the frequency of a constant-amplitude driving force while detecting the amplitude of the resulting physical motion. The shape of the frequency response curve depends on temperature, pressure and on the particular gas surrounding the device. It will of course be appreciated that at zero pressure there is no gas damping, and so, generally, a sharp resonance is expected at the natural frequency fₒ. As pressure increases from zero, the resonance peak decreases in amplitude and shifts in frequency. For convenience, each frequency response curve is characterized by the following two dimensionless quantities: fₚₑₐₖ/fₒ and Aₚₑₐₖ/A_{ω = 0}, where A_{ω=0} is the amplitude in the limit of zero frequency. Such dimensionless quantities can be related to the two parameters of the model, i.e., ω_{g} and 1/ωₒτ.

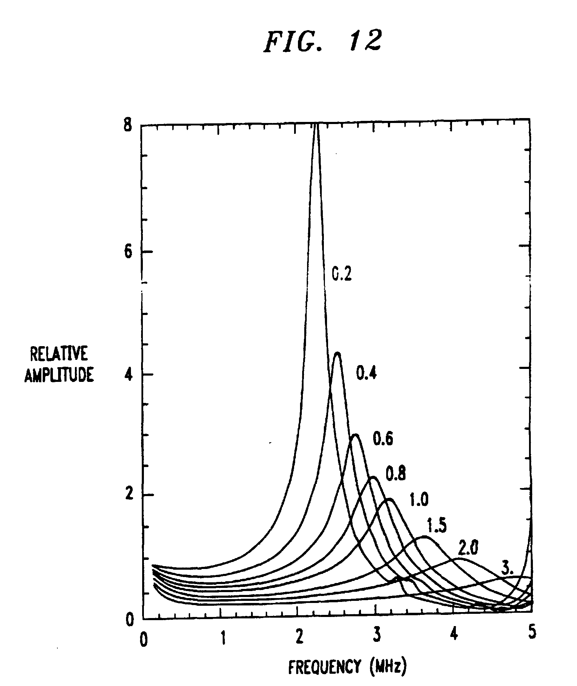

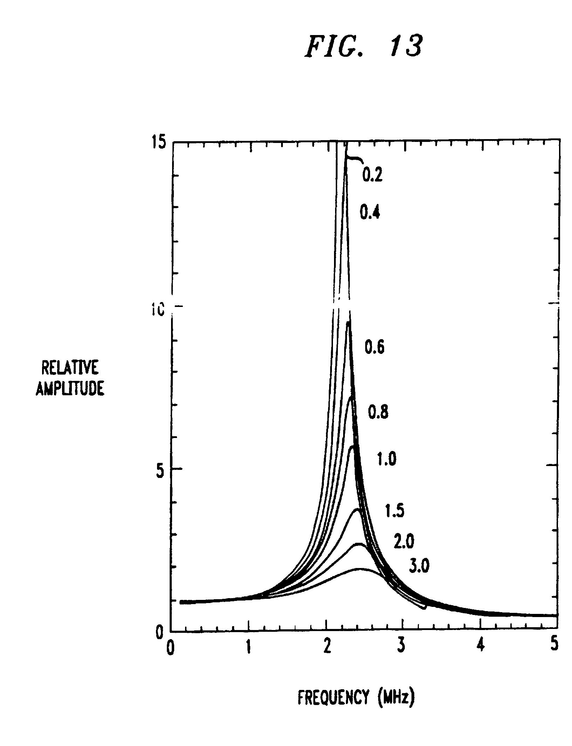

Several examples of such mapping are provided below. In particular, the measured frequency response for Samples 2 and 5, under a helium atmosphere, are shown in FIGS. 12 and 13, respectively. The various curves in each Figure correspond to different helium pressures ranging from 0.2 to 3.0 bar, wherein those values are used to identify each curve in those Figures. Each curve has been normalized so that at zero frequency, the amplitude is unity.

For Sample 5 (FIG. 13), relative amplitude rises monotonically towards a maximum at a "peak" frequency in the range of about 2.2 to 2.6 MHz. The peak frequency shifts by only about ten percent over the pressure range of 0.2 to 3.0 bar. For sample 2 (FIG. 12), the relative amplitude drops below unity, increasingly so for higher pressures, before rising towards a maximum. In contrast to the slight shift in peak frequency shown for Sample 5, peak frequency more than doubles with increasing pressure. The samples 2 and 5 have the same hole layout (FIG. 11b) and nearly the same natural frequency. They differ only in gap size.

Such frequency response curves can be repeated for other gases, e.g., hydrogen, neon and the like, and for the other Sample modulators. The frequency and amplitude of measured resonance peaks extracted from such frequency response curves can then be plotted versus pressure. Corresponding values of ω_{g}/ωₒ and 1/ωₒτ are then extracted using expression (8).

### B. Results for ω_{g}/ωₒ

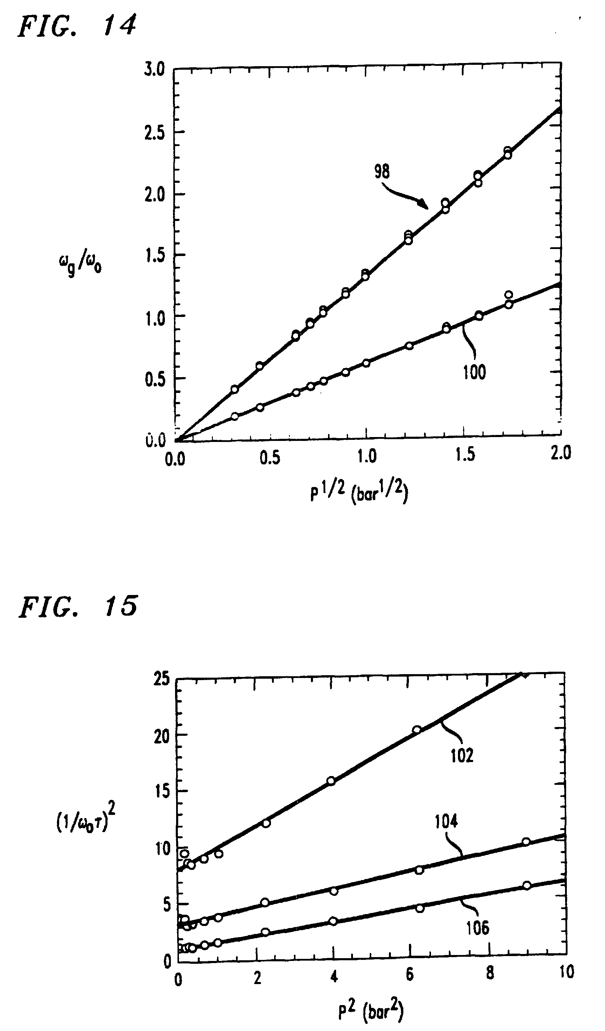

FIG. 14 shows ω_{g}/ωₒ plotted versus P^{1/2} for Samples 2 (plot 98) and 5 (plot 100). The plot incorporates data obtained under hydrogen and neon atmospheres, as well as helium. FIG. 14 indicates that (i) ω_{g}/ωₒ is proportional to P^{1/2}, (ii) ω_{g}/ωₒ is independent of gas type, and (iii) ω_{g}/ωₒ varies inversely with gap spacing. Such observations are consistent with expressions (7) and (12).

### C. Results for τ

FIG. 15 shows plots of (1/ωₒτ)² versus P² for hydrogen (102), helium (104) and neon (106) atmospheres. The intercepts and slopes of the lines 102, 104 and 106 determine (α/ωₒ)² and (β/ωₒ)² for each corresponding gas. As previously described, both α and β are functions of the various physical dimensions of the device, e.g., modulator. In addition, α depends on the gas molecular weight and β on the gas viscosity. It was empirically determined that the expressions:${\text{α = α}}_{\text{o}} {\text{/ M}}^{\text{1/4}}$${\text{β = β}}_{\text{o}} {\text{/ η}}^{\text{1/2}}$ represent the data well. The parameters αₒ and βₒ depend on device geometry and so are different for each Sample modulator. From the data, it was found that, for the Sample modulators:${\text{α = 1.89x10}}^{\text{5}} {\text{·N·d·h / M}}^{\text{1/4}}$${\text{β = 2.77x10}}^{\text{5}} {\text{·N·d·h /η}}^{\text{1/2}}$

According to expression (5), 1/τ should be inversely proportional to the area of the device; in the case of the Sample modulators, that area is the membrane diameter D². Explicit dependence on D² can be introduced into a general expression for 1/τ :${\text{1/τ = 4.3x10}}^{\text{9}} {\text{·[N·d·h / (D}}^{\text{2}} {\text{M}}^{\text{1/4}} {\text{)]· [1 + (2.1 M}}^{\text{1/2}} {\text{/η)P}}^{\text{2}} {\text{]}}^{\text{1/2}}$ where, as before, N is the number of damping holes of diameter d, assumed to be distributed "uniformly" over the membrane, D is the device (membrane) diameter, h is the gap between the movable layer (membrane) and the nonmoving layer (substrate) when the modulator is in the quiescent state, η is the gas viscosity in units of 10⁻⁵ poise, M is the molecular weight of the gas, and P is the pressure in bar.

### 9.0 Modeling

The following example illustrates an application of the present invention, wherein the data rate and physical configuration of a modulator operating (satisfactorily) at substantially the fastest rate possible for a given set of conditions are determined. The example assumes a gap of 0.97 microns, a membrane diameter of 150 microns and a maximum argon pressure of 2 bar.

From FIG. 14,${\text{f}}_{\text{g}} {\text{= 1.3P}}^{\text{1/2}}$ for a modulator configured similarly to the modulator of the present example. Thus, at 2 bar, f_{g} = 1.87 MHz. Using ω_{g}/ωₒ ≈ 2, then fₒ must be 0.93 MHz, corresponding to a maximum data rate of about 3 Mbits/sec.

For a modulator having a "drumhead" configuration,${\text{f}}_{\text{o}} \text{∼ 1/D [ S/} \text{ρ} {\text{]}}^{\text{1/2}}$ The natural frequency (with membrane diameter D fixed) can therefore be decreased by a factor of two by decreasing the membrane stress S, by a factor of four. The sample modulator had a stress of about 800 MPa, so the stress would have to be reduced to approximately 200 Mpa for the aforementioned reduction. Alternatively, average membrane density could be increased, such as by increasing the thickness of the electrode disposed on the membrane.

Having chosen ω_{g}/ωₒ ≈ 2, then, for near "optimal" performance, i.e., about 5 percent or less ringing, 1/ωₒτ must be about 3 (see FIG. 3). Using h = 0.97 microns, D = 150 microns, ωₒ = 0.93x10⁶ · 2π, P = 2 bar, and using the molecular weight and viscosity for argon, expression (20) becomes:${\text{1/ω}}_{\text{o}} \text{τ = 0.023·N·d}$ Setting expression (23) equal to 3 yields:$\text{N·d = 130 microns}$ Choosing to fix d at 5 microns gives for the number of damping holes N = 26.

In the above example, membrane diameter D was fixed at 150 microns and the stress S was altered to change the natural frequency. In a second example described below, the stress S is fixed and D is allowed to vary. Since f_{g} is independent of D, expression (21) can still be used, so that fₒ remains at 0.93 MHz. The natural frequency is now reduced to that value by increasing the membrane diameter. Using expression (22), the diameter must be enlarged by a factor 2MHz/0.93MHz. The new diameter is then 322 microns. With P = 2 bar, expression (20) now gives:${\text{1/ω}}_{\text{o}} \text{τ = 0.0049·N·d}$ Setting expression (25) equal to 3 yields:$\text{N·d = 610 microns}$ Given a 5 micron diameter damping hole, 122 holes are required.

## Claims

1. A high-speed gas-damped micromechanical structure (1), comprising:
a movable member (15) that operates at frequencies greater than about 1 megahertz, the movable member (15) having a plurality of holes (14);
a gas-tight seal (33), enclosing the movable member (15); and
a gas within the gas-tight seal (33), wherein,
ambient pressure within the gas-tight seal (33), is greater than atmospheric pressure.

2. The structure of claim 1, wherein the movable member is **characterized by** a first side and a second side, and further comprising a cavity located on the second side of the movable member, wherein, the plurality of holes (14) in the movable member (15) allow gas to escape from the cavity during oscillatory motion of the movable member.

3. The structure of claim 2 wherein micromechanical structure is an optical modulator, and further wherein a bottom of the cavity comprises a non-moving layer (10) and further wherein the movable layer moves toward the non-moving layer in response to a signal.

4. The structure of claim 3 wherein the non-moving layer is **characterized by** a first refractive index and the movable layer is **characterized by** a second refractive index and wherein the second refractive index is about equal to the square root of the first refractive index.

5. The structure of claims 3 or 4 wherein the distance between the movable layer and the non-moving layer is equal to about one quarter of a wavelength of an optical signal when the movable layer is in an equilibrium position, and the ambient gas pressure is at least 2 bar.

6. The structure of claims 3 or 4 wherein the distance between the movable layer and the non-moving layer is in the range of 0.6 to 0.75 times a wavelength of an optical signal when the movable layer is in an equilibrium position, and the ambient gas pressure is at least 8 bar.

7. The structure of any one of claims 1 - 6, and further wherein 1/ (ωₒτ) is at least about 1.4 and ω_{g}/ωₒ is at least about 1.3, wherein,
1/ (ωₒτ) is a measure of porosity of the movable member;
ω_{g}/ωₒ is reduced gas frequency; and
ωₒ is resonant frequency of the movable member in a vacuum.

8. The structure of any one of claims 1 - 6, and further wherein:${\text{0.25 + 0.7(ω}}_{\text{g}} {\text{/ω}}_{\text{o}} {\text{)}}^{\text{2}} {\text{- 0.8(ω}}_{\text{g}} {\text{/ω}}_{\text{o}} {\text{- 1.25) ≤ 1/ (ω}}_{\text{o}} {\text{τ) ≤ 0.25 + 0.7(ω}}_{\text{g}} {\text{/ω}}_{\text{o}} {\text{)}}^{\text{2}} {\text{+ (ω}}_{\text{g}} {\text{/ω}}_{\text{o}} \text{- 1.25).}$

9. The structure of any one of claims 1-6, and further wherein ω_{g}/ωₒ is about 2.0 and 2.7≤ 1/ (ωₒτ) ≤ 3 .8.

10. The structure of any one of the claims 1-9 wherein the gas is selected from the group consisting of hydrogen and noble gases.

## Patentansprüche

1. Gasgedämpfte mikromechanische Hochgeschwindigkeitsstruktur (1), umfassend:
ein bewegliches Element (15), das bei Frequenzen größer als 1 Megahertz arbeitet, wobei das bewegliche Element (15) mehrere Löcher (14) aufweist,
eine gasdichte Kapselung (33), die das bewegliche Element (15) einschliesst, und
ein Gas innerhalb der gasdichten Kapselung (33), wobei
der Umgebungsdruck innerhalb der gasdichten Kapselung (33) größer als der atmosphärische Druck ist.

2. Struktur nach Anspruch 1, wobei das bewegliche Element durch eine erste Seite und eine zweite Seite gekennzeichnet wird und außerdem einen Hohlraum umfasst, der auf der zweiten Seite des beweglichen Elementes angeordnet ist, wobei die mehreren Löcher (14) in dem beweglichen Element (15) das Austreten des Gases aus dem Hohlraum während der Schwingbewegung des beweglichen Elementes ermöglichen.

3. Struktur nach Anspruch 2, wobei die mikromechanische Struktur ein optischer Modulator ist und außerdem, wobei ein Boden des Hohlraums eine unbewegliche Schicht (10) umfasst und wobei sich die bewegliche Schicht als Reaktion auf ein Signal auf die unbewegliche Schicht zu bewegt.

4. Struktur nach Anspruch 3, wobei die unbewegliche Schicht durch einen ersten Brechungsindex und die bewegliche Schicht durch einen zweiten Brechungsindex gekennzeichnet ist, und wobei der zweite Brechungsindex ungefähr gleich der Quadratwurzel des ersten Brechungsindexes ist.

5. Struktur nach Anspruch 3 oder 4, wobei der Abstand zwischen der beweglichen Schicht und der unbeweglichen Schicht gleich ungefähr einem Viertel einer Wellenlänge eines optischen Signals ist, wenn die bewegliche Schicht in einer Gleichgewichtsposition ist und der Umgebungsgasdruck mindestens 2 bar beträgt.

6. Struktur nach Anspruch 3 oder 4, wobei der Abstand zwischen der beweglichen Schicht und der unbeweglichen Schicht in dem Bereich des 0,6- bis 0,75-fachen einer Wellenlänge eines optischen Signals liegt, wenn die bewegliche Schicht in einer Gleichgewichtsposition ist und der Umgebungsgasdruck mindestens 8 bar beträgt.

7. Struktur nach einem der Ansprüche 1 bis 6 und außerdem wobei 1/(ωₒτ) mindestens ungefähr 1,4 und ω_{g}/ωₒ mindestens ungefähr 1,3 ist, wobei
1/(ωₒτ) ein Maß der Porosität des beweglichen Elementes ist,
ω_{g}/ωₒ die reduzierte Gasfrequenz; und
ωₒ die Resonanzfrequenz des beweglichen Elementes in einem Vakuum ist.

8. Struktur nach einem der Ansprüche 1 bis 6 und außerdem wobei:${\text{0, 25 + 0,7(ω}}_{\text{g}} {\text{/ω}}_{\text{o}} {\text{)}}^{\text{2}} {\text{- 0,8(ω}}_{\text{g}} {\text{/ω}}_{\text{o}} {\text{- 1,25) ≤ 1/(ω}}_{\text{o}} \text{τ)} {\text{≤ 0, 25 + 0,7(ω}}_{\text{g}} {\text{/ω}}_{\text{o}} {\text{)}}^{\text{2}} {\text{+ (ω}}_{\text{g}} {\text{/ω}}_{\text{o}} \text{- 1,25).}$

9. Struktur nach einem der Ansprüche 1 bis 6 und außerdem wobei ω_{g}/ωₒ ungefähr 2,0 und 2,7 ≤ 1/(ωₒτ) ≤ 3,8 ist.

10. Struktur nach einem der Ansprüche 1 bis 9, wobei das Gas aus der Gruppe ausgewählt wird, die Wasserstoff und Inertgase enthält.

## Revendications

1. Structure micromécanique (1) amortie par un gaz à vitesse élevée, comprenant :
un élément mobile (15) qui fonctionne à des fréquences supérieures à environ 1 mégahertz, l'élément mobile (15) présentant une pluralité de trous (14) ;
un joint étanche aux gaz (33) enserrant l'élément mobile (15) ; et
un gaz à l'intérieur du joint étanche aux gaz (33), dans lequel
la pression ambiante à l'intérieur du joint étanche aux gaz (33) est supérieure à la pression atmosphérique.

2. Structure selon la revendication 1, dans laquelle l'élément mobile est **caractérisé par** un premier côté et un second côté, et comprenant en outre une cavité située sur le second côté de l'élément mobile et dans laquelle la pluralité de trous (14) de l'élément mobile (15) permet au gaz de s'échapper de la cavité au cours d'un mouvement oscillant de l'élément mobile.

3. Structure selon la revendication 2, dans laquelle la structure micromécanique est un modulateur optique, dans laquelle également un fond de la cavité comprend une couche immobile (10) et dans laquelle en outre la couche mobile se déplace vers la couche immobile en réponse à un signal.

4. Structure selon la revendication 3, dans laquelle la couche immobile est **caractérisée par** un premier indice de réfraction et la couche mobile est **caractérisée par** un second indice de réfraction et dans laquelle le second indice de réfraction est à peu près égal à la racine carrée du premier indice de réfraction.

5. Structure selon la revendication 3 ou 4, dans laquelle la distance entre la couche mobile et la couche immobile est égale à environ un quart d'une longueur d'onde d'un signal optique lorsque la couche mobile se trouve dans une position d'équilibre, et la pression de gaz ambiante est d'au moins 2 bars.

6. Structure selon la revendication 3 ou 4, dans laquelle la distance entre la couche mobile et la couche immobile se situe dans la plage de 0,6 à 0,75 fois une longueur d'onde d'un signal optique lorsque la couche mobile se trouve dans une position d'équilibre, et la pression de gaz ambiante est d'au moins 8 bars.

7. Structure selon l'une quelconque des revendications 1 à 6, dans laquelle également le rapport 1/ (ωₒτ) est d'au moins environ 1,4 et le rapport ω_{g}/ωₒ est d'au moins environ 1,3, où :
le rapport 1/(ωₒτ) est une mesure de la porosité de l'élément mobile,
le rapport ω_{g}/ωₒ est une fréquence de gaz réduite, et
ωₒ est la fréquence de résonance de l'élément mobile dans un vide.

8. Structure selon l'une quelconque des revendications 1 à 6, dans laquelle également :${\text{0,25+0,7(ω}}_{\text{g}} {\text{/ω}}_{\text{o}} {\text{)}}^{\text{2}} {\text{-0,8(ω}}_{\text{g}} {\text{/ω}}_{\text{o}} {\text{-1,25) ≤ 1/(ω}}_{\text{o}} \text{τ) ≤} {\text{0,25+0,7 (ω}}_{\text{g}} {\text{/ω}}_{\text{o}} {\text{)}}^{\text{2}} {\text{+ (ω}}_{\text{g}} {\text{/ω}}_{\text{o}} \text{- 1,25).}$

9. Structure selon l'une quelconque des revendications 1 à 6, dans laquelle également le rapport ω_{g}/ωₒ est d'environ 2,0 et 2,7 ≤ 1/(ω_{g}τ) ≤ 3,8.

10. Structure selon l'une quelconque des revendications 1 à 9, dans laquelle le gaz est choisi dans le groupe constitué de l'hydrogène et des gaz nobles.
